# FASCICULE DE BREVET EUROPEEN

(11) **EP 4 331 974 B1**
(45) Date de publication et mention de la délivrance du brevet: **18.06.2025**
(21) Numéro de dépôt: 23193366.4
(22) Date de dépôt: 25.08.2023
(51) Int. Cl.: B64C 7/02, B64D 29/02, B64D 29/06, B64D 33/04, B64F 5/10

(54) **CARÉNAGE AMELIORÉ DE MÂT D'AÉRONEF, ENSEMBLE DE CARÉNAGE, MÂT D'AÉRONEF ET AÉRONEF**
VERBESSERTE VERKLEIDUNG FÜR EINEN FLUGZEUGPYLON, VERKLEIDUNGSANORDNUNG, FLUGZEUGPYLON UND FLUGZEUG
IMPROVED FAIRING FOR AN AIRCRAFT MAST, FAIRING ASSEMBLY, AIRCRAFT MAST AND AIRCRAFT

(30) Priorité: 30.08.2022 FR 2208690
(43) Date de publication de la demande: 06.03.2024
(73) Titulaire: AIRBUS OPERATIONS, 31060 Toulouse Cedex 9 (FR)
(72) Inventeur: MESSINA, Paolo, 31060 TOULOUSE (FR); ROBIGLIO, Thomas, 31060 TOULOUSE (FR); FIRMIGNAC, Thomas, 31670 LABEGE (FR)
(74) Mandataire: Cabinet Le Guen Maillet

(56) Documents cités:
- EP-A2- 2 390 187
- EP-A2- 2 583 900
- EP-B1- 2 190 739
- EP-B1- 2 964 531
- FR-A1- 2 964 947

## Description

### DOMAINE TECHNIQUE

La présente invention concerne un carénage de mât d'aéronef, notamment un carénage arrière de mât d'aéronef. L'invention concerne plus particulièrement un ensemble de carénage de mât comprenant un carénage et des éléments de fixation du carénage avec une structure primaire de l'aéronef, ainsi qu'un mât d'aéronef comprenant un tel ensemble de carénage et un aéronef comprenant un tel mât.

### ÉTAT DE LA TECHNIQUE ANTÉRIEURE

Les carénages d'aéronef sont notamment utilisés pour fournir des surfaces aérodynamiques permettant d'obtenir de bonnes performances de vol et de réduire la consommation de carburant. Certains carénages, dont ceux agencés autour d'un moteur de l'aéronef, sont prévus pour résister à des contraintes importantes. Ces contraintes proviennent par exemple d'une température élevée, de vibrations conséquentes, ou encore d'un besoin d'accès à des éléments agencés derrière le carénage. Les carénages arrière des mâts d'aéronef, c'est-à-dire ceux couvrant l'arrière du mât d'attache d'un moteur (encore appelé mât moteur) sont souvent considérés comme des structures secondaires arrière de l'aéronef. En d'autres termes, ils sont fixés sur une structure primaire de l'aéronef et des transferts d'efforts doivent pouvoir être opérés depuis la structure primaire vers ces carénages, et vice-versa. Afin de ne pas introduire de contraintes mécaniques inutiles, un montage isostatique des carénages arrière de mât d'aéronef est recherché. Le plus souvent, les points de fixation du carénage à la structure primaire, encore appelés interfaces, sont doublés selon le principe connu de *fail-safe,* de sorte qu'en cas de rupture de l'un d'entre eux, le point de fixation faisant doublon avec celui endommagé puisse assurer le transfert de charge requis. En effet, la position d'un carénage arrière de mât d'aéronef le rend vulnérable en cas d'éclatement d'un pneu du train principal. Dans ce cas, il est possible que deux points de fixation opérant en doublon puissent rompre simultanément.

De plus, les interfaces de fixation de ces carénages sont généralement intérieures et requièrent des opérations d'assemblage complexes lors de la fabrication de l'aéronef ou d'opérations de maintenance, ou encore la présence de trappes de visite.

FR 2 964 947 A1 divulgue un carénage de mât d'aéronef s'étendant selon un axe longitudinal, et comprenant une paroi présentant au moins deux flancs opposés respectivement orientés de part et d'autre par rapport audit axe longitudinal et une cavité intérieure centrale, les deux flancs opposés se rejoignant en partie inférieure ou supérieure dudit carénage, ledit carénage étant tel qu'il comprend :
- une nervure transversale avant fixée solidairement à ladite paroi et s'étendant perpendiculairement de part et d'autre dudit axe longitudinal, ladite nervure transversale avant comprenant une ouverture traversante configurée pour recevoir un pion d'une structure extérieure par emmanchage selon une direction parallèle audit axe longitudinal et,
- une nervure transversale arrière fixée solidairement à ladite paroi et s'étendant perpendiculairement de part et d'autre dudit axe longitudinal.

La situation peut être améliorée.

### EXPOSÉ DE L'INVENTION

Un objet de la présente invention est de proposer un carénage de mât d' aéronef permettant un montage isostatique grâce à des points de fixation mieux protégés en cas d'éclatement d'un pneumatique de train, facile à assembler depuis l'extérieur, tout en limitant le nombre de pièces pour ce faire.

A cet effet, il est proposé un carénage de mât d'aéronef s'étendant selon un axe longitudinal, et comprenant une paroi présentant au moins deux flancs opposés respectivement orientés de part et d'autre par rapport audit axe longitudinal et une cavité intérieure centrale, les deux flancs opposés se rejoignant en partie inférieure ou supérieure dudit carénage, ledit carénage comprenant :
- une nervure transversale avant fixée solidairement à ladite paroi et s'étendant perpendiculairement de part et d'autre dudit axe longitudinal, ladite nervure transversale avant comprenant une ouverture traversante configurée pour recevoir un pion d'une structure extérieure par emmanchage selon une direction parallèle audit axe longitudinal, et comprenant deux chapes présentant chacune des alésages suivant un axe longitudinal orienté perpendiculairement audit axe longitudinal du carénage et agencés en regard d'une ouverture traversante de l'un desdits flancs opposés, et,
- une nervure transversale arrière fixée solidairement à ladite paroi et s'étendant perpendiculairement de part et d'autre dudit axe longitudinal et comprenant deux chapes présentant chacune des alésages suivant un axe longitudinal orienté perpendiculairement audit axe longitudinal du carénage et agencés en regard d'une ouverture traversante de l'un desdits flancs opposés.

L'invention a également pour objet un ensemble de carénage comprenant un carénage de mât d'aéronef tel que décrit ci-avant et quatre éléments de fixation configurés pour être insérés et maintenus en position chacun dans un alésage de l'une desdites chapes.

Selon un mode de réalisation, le mât d'aéronef comprend un ensemble de carénage tel que précité et une structure primaire d'aéronef, la structure primaire d'aéronef comprenant un pion orienté selon un axe parallèle à l'axe longitudinal du carénage et agencé pour s'insérer dans l'ouverture traversante de la nervure transversale avant, et quatre ferrures respectivement agencées pour être insérées chacune dans l'une desdites chapes et présentant chacune une ouverture traversante configurée pour être agencée en regard de l'alésage de ladite chape et configurée pour recevoir une portion de l'un desdits quatre éléments de fixation inséré dans l'alésage de ladite chape, les ouvertures des ferrures destinées à être insérées dans les chapes de la nervure transversale avant du carénage présentent une forme oblongue s'étendant selon une direction perpendiculaire à l'axe longitudinal du carénage et lesdites ouvertures des ferrures destinées à être insérées dans les chapes de la nervure transversale arrière dudit carénage présentent une forme oblongue s'étendant selon un axe parallèle audit axe longitudinal dudit carénage, ou vice-versa.

Selon un mode de réalisation, les ouvertures des ferrures destinées à être insérées dans les chapes de la nervure transversale avant dudit carénage présentent une forme oblongue s'étendant selon une direction perpendiculaire à l'axe longitudinal du carénage et les ouvertures des ferrures destinées à être insérées dans les chapes de la nervure transversale arrière dudit carénage présentent une forme oblongue s' étendant selon un axe parallèle audit axe longitudinal dudit carénage.

Selon un mode de réalisation, les ouvertures des ferrures destinées à être insérées dans les chapes de la nervure transversale avant dudit carénage présentent une forme oblongue s'étendant selon une direction parallèle à l'axe longitudinal du carénage et les ouvertures des ferrures destinées à être insérées dans les chapes de la nervure transversale arrière dudit carénage présentent une forme oblongue s'étendant selon un axe perpendiculaire audit axe longitudinal dudit carénage.

Selon un mode de réalisation, le pion présente une forme conique ou tronconique.

Selon un mode de réalisation, les éléments de fixation sont des vis à tête fraisée et tout ou partie de chacun des alésages des chapes du mât d'aéronef comprend un filetage intérieur de forme complémentaire à un filetage desdites vis à tête fraisée.

Selon un mode de réalisation, six interfaces de liaison mécanique seulement sont implémentées entre la structure primaire et le carénage, le pion étant doublé et la nervure transversale avant comprenant une deuxième ouverture traversante.

L'invention a également pour objet un aéronef comprenant un carénage tel que précédemment décrit, ou un ensemble de carénage tel que précité, ou un mât d' aéronef tel que décrit ci-avant.

Enfin, l'invention a pour objet un procédé d'assemblage d'un mât d'aéronef tel que décrit ci-avant, le procédé comprenant :
- un emmanchage du carénage sur le pion de la structure primaire du mât d'aéronef, puis,
- un positionnement des quatre chapes du carénage autour des quatre ferrures de la structure primaire de sorte à aligner les alésages des chapes avec les ouvertures oblongues des ferrures, les ferrures étant insérées chacune dans l'une des chapes, puis,
- une insertion de chacun des quatre éléments de fixation dans un alésage d'une chape dans laquelle est insérée une ferrure et dans l'ouverture oblongue de la ferrure, de sorte à maintenir en position le carénage du mât d'aéronef sur la structure primaire selon un équilibre isostatique.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement un groupe motopropulseur assemblé sous une voilure d'aéronef via un mât de fixation caréné ;
[Fig. 2] illustre schématiquement et en perspective un carénage d' aéronef selon un mode de réalisation positionné en regard d'un élément de structure primaire ;
[Fig. 3] est un agrandissement d'une partie de la Fig. 2, illustrant un pion de positionnement de carénage et une chape de fixation de carénage ;
[Fig. 4] est une coupe illustrant schématiquement une chape de fixation avant de carénage et un élément de fixation configuré pour le verrouillage d'une ferrure de structure primaire dans la chape de fixation de carénage ;
[Fig. 5] est une coupe illustrant schématiquement une chape de fixation arrière de carénage et un élément de fixation configuré pour le verrouillage d'une ferrure de structure primaire dans la chape de fixation de carénage ;
[Fig. 6] illustre schématiquement un aéronef comprenant un carénage selon un mode de réalisation ;
[Fig. 7] est un diagramme illustrant un procédé d'assemblage d'un mât d'aéronef comprenant un carénage selon un mode de réalisation ; et,
[Fig. 8] est une coupe en perspective illustrant des détails d'une interface de fixation entre une partie d'un carénage de mât d'aéronef et une structure primaire, selon un mode de réalisation.

### EXPOSÉ DÉTAILLÉ DE MODES DE RÉALISATION

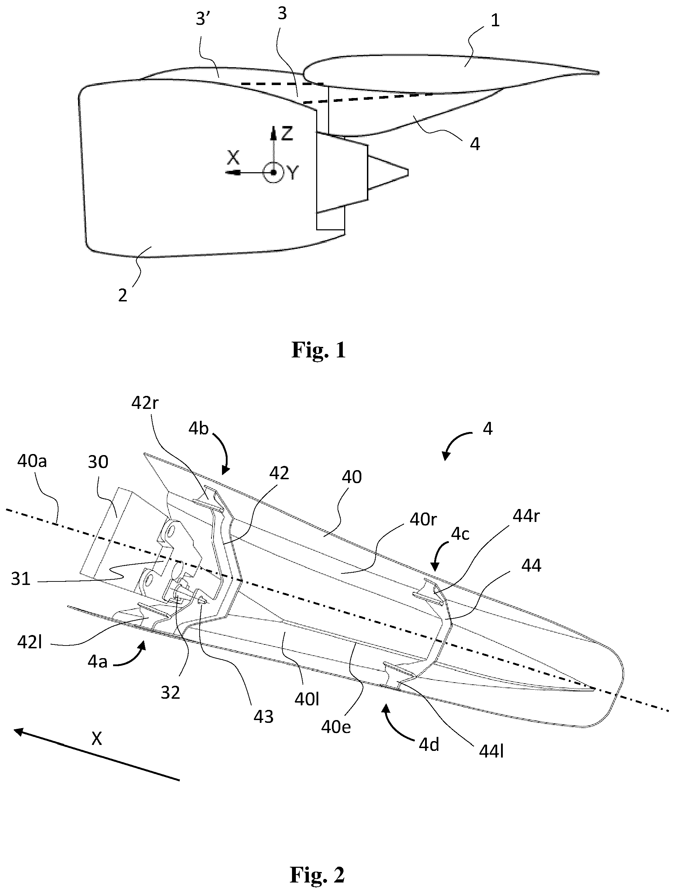

La **Fig. 1** illustre une voilure 1 d'aéronef sous laquelle est assemblé un groupe motopropulseur 2 grâce à un mât moteur 3. Un carénage avant 3' ainsi qu'un carénage arrière 4 couvrent le mât moteur 3 aux fins d'obtenir de bonnes performances aérodynamiques. Le mât moteur 3 est un élément de la structure primaire de l'aéronef, c'est-à-dire la structure « vitale » de l'aéronef, indispensable au vol. Les carénages 3' et 4 sont des éléments de structure secondaire de l'aéronef. Ils participent à l'amélioration des performances aérodynamiques de vol et permettent de réduire la consommation de carburant. Dans la présente description, une direction X est définie comme une direction selon laquelle est orienté le fuselage de l'aéronef comprenant les éléments décrits sur la Fig. 1; une direction Y est une direction transversale, perpendiculaire à la direction X et définissant un plan horizontal avec la direction X ; et une direction Z est une direction orientée verticalement, perpendiculaire à la direction X et perpendiculaire à la direction Y. Ainsi, les directions X, Y et Z définissent un trièdre rectangle de référence et un déplacement de l'avion en vol est opéré selon la direction X lorsque le vol est symétrique (en l'absence de dérapage de l'avion dans l'air). Le mât moteur 3 comprend une ferrure 30 sur laquelle est fixé un support de fixation 31 portant un pion 32, éventuellement doublé. Ces éléments 30, 31 et 32, utiles à la fixation du carénage 4, ne sont pas représentés sur la Fig. 1 mais visibles sur la Fig. 2.

Dans la présente description, on nomme indifféremment « carénage », « carénage arrière », « carénage de mât moteur » ou « carénage de structure secondaire », le carénage arrière 4.

De plus, dans la présente description, le terme « avant » désigne une partie d'un élément orientée ou située du côté vers lequel l'avion se déplace en vol, et le terme « arrière » désigne une partie d'un élément orientée du côté opposé à l'avant, c'est-à-dire du côté de l'espace laissé vacant par l'avion qui se déplace dans l'air. En outre, dans la présente description, les termes « bas », « basse », « inférieure » ou « inférieure » désignent une partie d'une pièce orientée ou située du côté du sol lorsque l'aéronef est au sol ou opère un vol normal en croisière à une altitude stable, et les termes « haut », « haute », « supérieur » ou « supérieure » désignent une partie d'une pièce orientée ou située du côté du ciel lorsque l'aéronef est au sol ou opère un vol normal en croisière à une altitude stable.

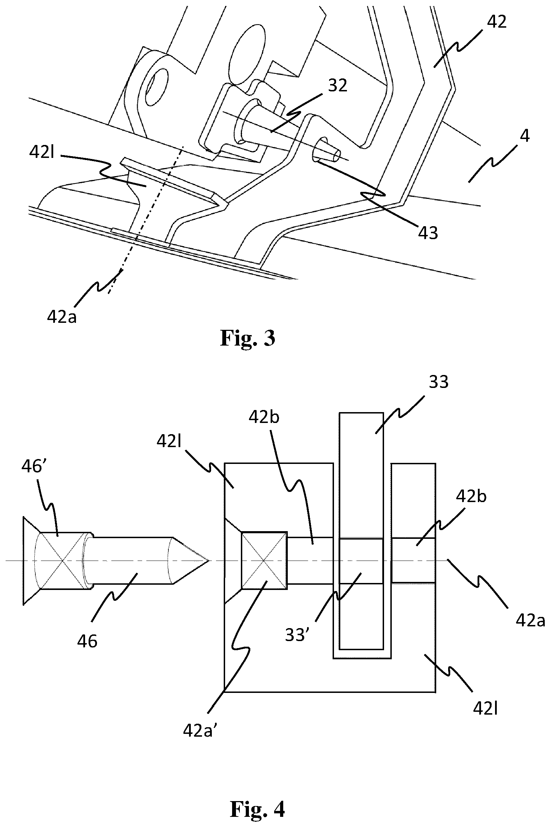

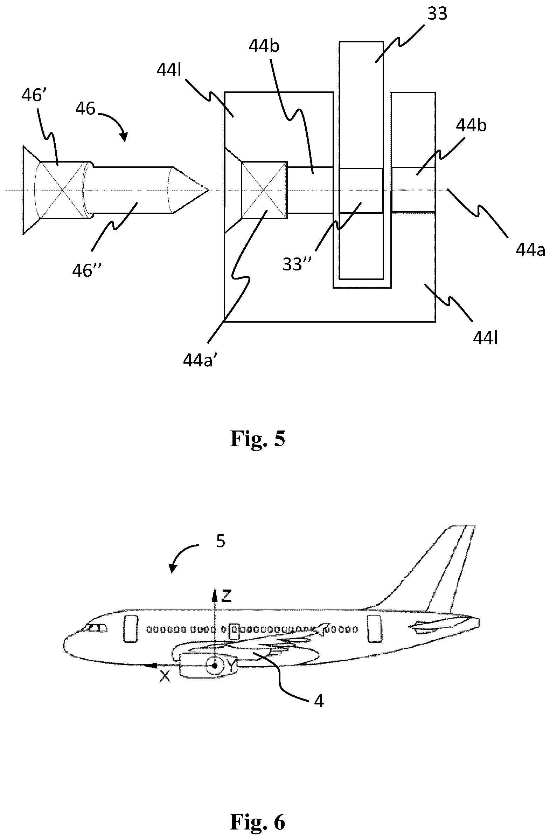

La **Fig. 2** représente le carénage arrière 4 selon une vue de haut en perspective, lorsque celui-ci est positionné en regard de la ferrure 30 de la structure primaire 3, portant le support de pion 31 sur lequel est assemblé le pion 32 de positionnement de carénage. Le carénage 4 est globalement d'aspect longiforme, se présente sous la forme d'une coque ouverte en partie supérieure, et présente un axe longitudinal 40a. Une paroi 40 de carénage présente deux flancs 401 et 40r opposés l'un à l'autre et respectivement orientés vers le travers gauche et vers le travers droit quand le carénage 4 est assemblé sur la structure primaire 3. Selon un mode de réalisation, l'axe longitudinal 40a est parallèle à la direction X lorsque le carénage 4 est assemblé sur la structure primaire 3 d'aéronef. Astucieusement, le carénage 4 est assemblé sur la structure primaire 3 par emmanchage du pion 32 de positionnement de carénage dans une ouverture 43 agencée dans une oreille d'une nervure transversale avant 42 du carénage 4, laquelle nervure 42 présente une forme générale en U, et par quatre interfaces de fixation 4a, 4b, 4c et 4d agencées dans la partie supérieure du carénage 4. Selon un mode de réalisation, les flancs 401 et 40r se rejoignent pour former une arête inférieure 40e dans la partie basse du carénage 4. La nervure transversale avant 42 est fixée solidairement à la paroi 40 de carénage, et donc aux flancs 401 et 40r, et confère de la rigidité au carénage 4. La nervure transversale avant 42, s'étendant perpendiculairement à l'axe longitudinal 40a, de part et d'autre de celui-ci, présente deux chapes 421 et 42r de fixation de carénage. Selon un mode de réalisation, la nervure 42 présente une forme générale en U et chaque partie de la nervure 42 qui s'étend de part et d'autre perpendiculairement à l'axe longitudinal 40a est adossée sur une partie avant de l'un des flancs 401 et 40r du carénage 4. Selon des variantes de réalisation, la nervure transversale avant 42 peut être pleine ou ajourée. La chape 421 est agencée à l'extrémité de la nervure transversale avant 42 située du côté du travers gauche de l'aéronef quand le carénage est assemblé sur la structure primaire 3 et la chape 42r est agencée à l'extrémité de la nervure transversale avant 42 située du côté du travers droit de l'aéronef quand le carénage est assemblé sur la structure primaire 3. De façon similaire, une nervure transversale arrière 44, maintenue solidaire de la paroi 40, et donc des flancs 401 et 40r, s'étend transversalement de part et d'autre de l'axe longitudinal 40a et perpendiculairement à celui-ci. Selon un mode de réalisation, la nervure 44 présente une forme générale en U et chaque partie de la nervure 44 qui s'étend de part et d'autre perpendiculairement à l'axe longitudinal 40a est adossée sur une partie arrière de l'un des flancs 401 et 40r du carénage 4. Selon des variantes de réalisation, la nervure transversale arrière 44 peut être pleine ou ajourée. Tout comme la nervure transversale avant 42, la nervure transversale arrière 44 confère une rigidité au carénage 4 et offre des points d'interface de fixation. Pour ce faire, des chapes 441 et 44r sont respectivement agencées aux extrémités de la nervure transversale arrière 44. Avantageusement, chacune des chapes de fixation 421, 42r, 441 et 44r se présente sous la forme d'une ferrure en U comprenant deux bras dans lesquels est réalisé un alésage traversant, de sorte à pouvoir opérer une fixation d'une ferrure insérée entre les deux bras de la chape et comprenant une ouverture traversante, lorsque cette ouverture traversante est positionnée dans l'alignement de l'alésage réalisé dans les deux bras de la chape. Bien évidemment, l'ouverture traversante d'une ferrure configurée pour être fixée à la chape est configurée pour recevoir un élément de fixation inséré dans l'alésage de la chape, ou plus précisément dans chacun des deux alésages respectivement agencés dans les deux bras de la chape, et alignés selon un même axe central. La **Fig. 3** représente une partie du carénage 4 déjà représentée sur la Fig. 2 et agrandie pour illustrer des détails du pion 32 emmanché dans l'ouverture 43 de la nervure transversale avant 42, ainsi que la chape 421. Avantageusement, l'alésage de la chape 421 est réalisé selon un axe central 42a, perpendiculaire à l'axe longitudinal 40a du carénage 4. Selon un mode de réalisation, le pion 32 présente une forme conique ou tronconique visant à faciliter le guidage du carénage 4 par rapport au pion 32 lors de l'emmanchage de l'un sur l'autre. La **Fig. 4** représente une coupe selon un plan YZ de la chape de fixation 421 formant interface de fixation avec une ferrure 33 de la structure primaire 3. Un alésage 42b est réalisé à travers les deux bras de la chape 421, selon un axe central d'alésage 42a. La ferrure 33 de l'interface de fixation 4a comprend un alésage 33' configuré pour recevoir une portion 46' d'une vis à tête fraisée 46 lorsque la vis 46 présentant un filetage 46' est vissée dans le bras de la chape 421 présentant un taraudage 42a', complémentaire au filetage 46'. Selon un mode de réalisation préféré, l'ouverture 33' de l'interface de fixation 4a (ainsi que celle de l'interface de fixation 4b) présente une forme oblongue s'étendant selon la direction Z. La présence d'une forme oblongue permet avantageusement de conserver un équilibre isostatique de l'assemblage du carénage 4 sur la structure primaire 3 puisque, comme cela sera détaillé plus loin, les ferrures 33 des interfaces de fixation arrière agencées sur la nervure transversale arrière 44 présentent préférentiellement une forme oblongue s'étendant selon la direction X. Bien évidemment, l'élément de fixation 46 peut ne pas être une vis, mais tout autre élément de fixation configuré pour être inséré dans l'alésage 42b de chacun des bras de chape, pour traverser simultanément l'ouverture 33' oblongue lorsque la ferrure 33 est insérée dans la chape 421 et pour être verrouillé en position afin d'éviter un désassemblage de l'interface et une perte de l'élément de fixation 46. Par exemple, l'élément de fixation 46 peut être une goupille, ou une clavette, dont la tête présente une forme lisse pour offrir une continuité de surface avec le carénage 4 et dont le diamètre permet une insertion en force aux fins d'obtenir un maintien en position de l'élément de fixation 46, une fois celui-ci inséré dans la chape 421. Avantageusement, cette configuration permet d'opérer une fixation du carénage depuis l'extérieur du carénage 4, simplifiant sensiblement les opérations de montage et de démontage, et permettant de s'affranchir d'avoir à implémenter des trappes de visite dans le carénage 4. La chape 42r de fixation de carénage est réalisée selon un principe similaire, hormis qu'elle est agencée de façon symétrique à la chape 421 par rapport à l'axe longitudinal 40a, de sorte à permettre, là encore, une insertion d'un élément de fixation 46 depuis l'extérieur du carénage, sans requérir d'opération complexe lors du montage et du démontage et sans requérir de trappes de visite dans le carénage 4. Selon un mode de réalisation, l'ouverture 33' de la ferrure 33 configurée pour être insérée dans la chape 42r présente elle aussi une forme oblongue s'étendant selon la direction Z. Ainsi, les deux ouvertures 33' des deux ferrures 33 configurées pour être respectivement insérées dans les chapes 421 et 42r de la nervure transversale avant 42 présentent toutes les deux une ouverture oblongue s'étendant selon l'axe Z, donc la largeur est égale au diamètre de l'alésage 42b et donc la longueur est supérieure à celui-ci. La **Fig. 5** illustre la chape de fixation 441 agencée sur la nervure transversale arrière 44. La chape comprend deux bras dans lesquels est réalisé un alésage 44b selon un axe longitudinal 44a, perpendiculaire à l'axe longitudinal 40a du carénage 4. Un filetage intérieur (ou taraudage) 44a' permet l'insertion d'un élément de fixation 46 lorsque celui-ci est implémenté sous la forme d'une vis, et maintient en position la vis. Là encore, l'élément de fixation peut être différent d'une vis, pour peu qu'il assure le maintien en position de la ferrure 33 configurée pour être insérée dans la chape 441 lorsque le carénage 4 est en position nominale d'assemblage sur la structure primaire 3. La seule différence notoire avec les interfaces de fixation auxquelles participent les chapes 421 et 42r est qu'une ouverture traversante 33" agencée dans la ferrure 33 présente préférentiellement une forme oblongue s'étendant selon une direction X. La chape de fixation 44r est semblable à la chape de fixation 441, si ce n'est qu'elle est agencée de façon symétrique à cette dernière par rapport à l'axe longitudinal 40a du carénage 4, pour permettre une insertion d'un élément de fixation 46 depuis l'extérieur du carénage 4, sans requérir d'opération complexe ni de trappe de visite.

Selon un mode de réalisation préféré, les interfaces de fixation 4a et 4b du carénage 4 sur la structure primaire 3 présentent donc chacune une ouverture 33' oblongue qui s'étend selon la direction Z et les interfaces de fixation 4c et 4d du carénage 4 sur la structure primaire 3 présentent chacune une ouverture 33' oblongue qui s'étend selon la direction X. Cela permet avantageusement de dissocier des chemins principaux (ou directions principales) et des chemins secondaires (ou directions secondaires) de reprise d'efforts entre le carénage 4 et la structure primaire 3. Plus précisément, le chemin principal de reprise d'efforts des interfaces de fixation 4a et 4b est opéré selon la direction X et le chemin secondaire de reprise d'efforts de ces mêmes interfaces 4a et 4b est opéré selon la direction Y. Selon un principe similaire, le chemin principal de reprise d'efforts des interfaces de fixation 4c et 4d est opéré selon la direction Z et le chemin secondaire de reprise d'efforts de ces mêmes interfaces 4c et 4d est opéré selon la direction Y.

Enfin, des reprises d'efforts selon les directions Y et Z, utilisées comme chemins principaux de reprise d'efforts, sont opérables via l'interface de fixation implémentée par le pion 32 opérant conjointement avec l'ouverture 43 de la nervure transversale avant 42, éventuellement doublés par un deuxième pion et une deuxième ouverture pour créer un deuxième ensemble de fixation (pion et ouverture) semblable à l'ensemble formé par le pion 32 et l'ouverture 43.

Avantageusement, les chemins principaux de reprise d'efforts décrits ci-avant participent à un équilibre isostatique de la fixation du carénage 4 sur la structure primaire 3 et les chemins secondaires de reprises d'efforts ne sont pas activés dans des conditions d'utilisation normale (c'est-à-dire en l'absence de contraintes physiques anormales sur le carénage 4 et/ou la structure primaire 3 qui le porte). Avantageusement, le carénage 4 présente des caractéristiques de rigidité sensiblement moindres selon les chemins secondaires de reprise d'efforts que selon les chemins principaux de reprise d'efforts, de sorte que l'assemblage du carénage 4 sur la structure primaire 3 conserve un caractère isostatique en conditions normales d'utilisation, mais que les chemins secondaires de reprise d'efforts puissent toutefois être activés lorsqu'un chemin principal de reprise d'efforts est défaillant ou inopérant (du fait de la rupture au moins partielle d'une interface de fixation).

Selon une variante de réalisation, les ouvertures traversantes 33' des chapes 421 et 42r de la nervure transversale avant 42 et les ouvertures traversantes 33" des chapes 441 et 44r de la nervure transversale arrière 44 ne présentent pas des formes oblongues, mais des alésages dont le diamètre est au moins égal au diamètre de l'alésage des bras de la chape dans laquelle la ferrure 33 est insérée. Cette configuration n'est toutefois pas préférée, dans la mesure où elle conduit à un équilibre hyperstatique de l'assemblage, potentiellement de nature à exercer des contraintes mécaniques inutiles entre la structure primaire 3 et le carénage 4.

Selon un mode de réalisation, le pion 32 et l'ouverture 43 de la nervure transversale avant 42 sont tous deux doublés pour former un emmanchement fail-safe d'un pion 32' et dans une ouverture 43', si le premier emmanchement devait être défectueux ou inopérant.

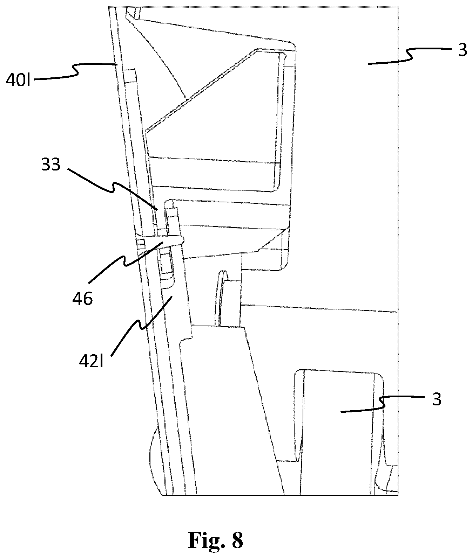

La Fig. 8 illustre des détails de l'interface de fixation 4a déjà autrement représentée sur les Fig. 2, Fig. 3 et Fig. 4. L'élément de fixation 46 maintient la ferrure 33 fixée en position dans la chape 421 de la nervure transversale avant 42. Cela permet d'opérer une fixation de la partie avant du flanc 401 de carénage 4 à la structure primaire 3, laquelle comprend la ferrure 33.

La **Fig. 6** représente un aéronef 5 comprenant avantageusement un carénage 4. Selon un mode de réalisation, le carénage 4 constitue, avec quatre éléments de fixation 46, un ensemble de carénage 4 sur la structure primaire 3 (le mât moteur 3). Le mât moteur 3 comprend alors avantageusement un tel ensemble de fixation visant à faciliter son assemblage tout en préservant préférentiellement un montage isostatique du carénage sur la structure primaire 3.

Avantageusement, en cas de rupture complète de l'une des interfaces de fixation 4a, 4b, 4c ou 4d entre le carénage 4 de mât d'aéronef et la structure primaire 3, les interfaces de fixation demeurant intactes permettent de garantir un bon équilibre des efforts en présence sur le carénage 4 de mât d'aéronef.

Selon un mode de réalisation préféré, les alésages des chapes de fixation des chapes 421, 42r, 441 et 44r sont réalisés autour d'axes respectivement orientés selon la direction Y.

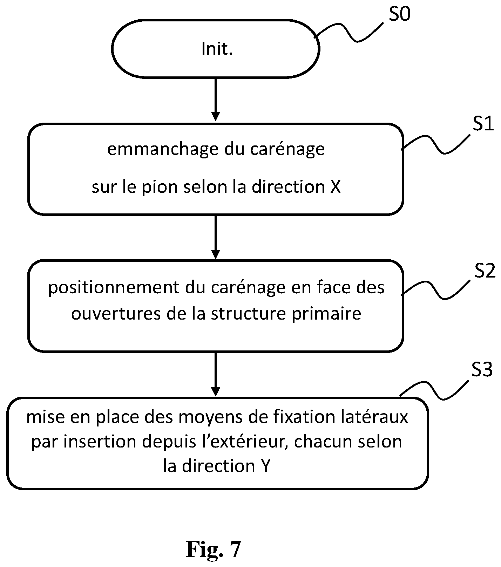

La **Fig. 7** illustre un procédé d'assemblage du carénage 4 sur la structure primaire d'un aéronef, tel que l'aéronef 5. Une étape **S0** est une étape de préparation à l'assemblage au terme de laquelle le carénage et la structure primaire sont prêts à être assemblés par un ou plusieurs opérateurs d'assemblage. Lors d'une étape **S1,** le carénage 4 est approché de la structure primaire 3 et notamment du pion 32 de positionnement. L'ouverture 43 de la nervure transversale avant 42 est emmanchée sur le pion 32. Puis, le carénage est positionné avec précision lors d'une étape S2 de sorte que chacune des quatre ferrures 33 soit positionnée pour que son ouverture traversante 33' ou 33", selon qu'il s'agisse d'une chape avant ou arrière, soit alignée en regard de l'alésage de la chape correspondante. Au terme de l'étape **S2,** le positionnement du carénage 4 par rapport à la structure primaire 3 et notamment aux ferrures 33 de la structure primaire 3 est tel qu'il est possible d'insérer les quatre éléments de fixation 46. Enfin, lors d'une étape **S3,** les éléments de fixation 46 sont insérés dans les alésages des quatre chapes de fixation et verrouillés en position. Le montage du carénage 4 sur la structure primaire est avantageusement aisé et conserve les avantages d'un équilibre isostatique.

En outre, la présence d'ouvertures traversantes oblongues dans les ferrures 33 et s'étendant respectivement deux à deux selon une direction X et selon une direction Z permet d'opérer un transfert de forces selon une direction principale en l'absence de défaut, en mode isostatique, puis d'opérer un transfert de forces selon une autre direction, en cas de défaut d'une interface de fixation.

## Revendications

1. Carénage (4) de mât d'aéronef s'étendant selon un axe longitudinal (40a), et comprenant une paroi (40) présentant au moins deux flancs opposés (40r, 401) respectivement orientés de part et d'autre par rapport audit axe longitudinal (40a) et une cavité intérieure centrale, les deux flancs opposés (40r, 401) se rejoignant en partie inférieure ou supérieure dudit carénage (4), ledit carénage (4) étant tel 4 qu'il comprend :
- une nervure transversale avant (42) fixée solidairement à ladite paroi (40) et s'étendant perpendiculairement de part et d'autre dudit axe longitudinal (40a), ladite nervure transversale avant (42) comprenant une ouverture traversante (43) configurée pour recevoir un pion (32) d'une structure extérieure (30, 31) par emmanchage selon une direction (X) parallèle audit axe longitudinal (40a), et comprenant deux chapes (421, 42r) présentant chacune des alésages suivant un axe longitudinal (42a) orienté perpendiculairement audit axe longitudinal (40a) du carénage (4) et agencés en regard d'une ouverture traversante de l'un desdits flancs opposés (40r, 401), et,
- une nervure transversale arrière (44) fixée solidairement à ladite paroi (40) et s'étendant perpendiculairement de part et d'autre dudit axe longitudinal (40a) et comprenant deux chapes (441, 44r) présentant chacune des alésages suivant un axe longitudinal (44a) orienté perpendiculairement audit axe longitudinal (40a) du carénage (4) et agencés en regard d'une ouverture traversante de l'un desdits flancs opposés (40r, 401).

2. Ensemble de carénage de mât d' aéronef comprenant un carénage (4) de mât d' aéronef selon la revendication 1 et quatre éléments de fixation (46) configurés pour être insérés et maintenus en position chacun dans un alésage de l'une desdites chapes.

3. Mât d'aéronef (3, 4) comprenant un ensemble de carénage selon la revendication 2 et une structure primaire (3) d'aéronef, ladite structure primaire (3) comprenant un pion (32) orienté selon un axe parallèle à l'axe longitudinal (40a) du carénage (4) et agencé pour s'insérer dans ladite ouverture traversante (43) de ladite nervure transversale avant (42), et quatre ferrures (33) respectivement agencées pour être insérées chacune dans l'une desdites chapes (421, 42r, 441, 44r) et présentant chacune une ouverture traversante (33', 33") configurée pour être agencée en regard dudit alésage de ladite chape et configurée pour recevoir une portion (46'') de l'un desdits quatre éléments de fixation (46) inséré dans ledit alésage (44b, 44b) de ladite chape, lesdites ouvertures (33 ') des ferrures destinées à être insérées dans les chapes (421, 42r) de la nervure transversale avant (42) dudit carénage (4) présentent une forme oblongue s'étendant selon une direction perpendiculaire à l'axe longitudinal (40a) du carénage (4) et lesdites ouvertures des ferrures destinées à être insérées dans les chapes (441, 44r) de la nervure transversale arrière (44) dudit carénage (4) présentent une forme oblongue s'étendant selon un axe parallèle audit axe longitudinal (40a) dudit carénage (4), ou vice-versa.

4. Mât d'aéronef selon la revendication 3, dans lequel lesdites ouvertures des ferrures destinées à être insérées dans les chapes de la nervure transversale avant (42) dudit carénage (4) présentent une forme oblongue s'étendant selon une direction perpendiculaire à l'axe longitudinal (40a) du carénage (4) et lesdites ouvertures des ferrures destinées à être insérées dans les chapes de la nervure transversale arrière (44) dudit carénage (4) présentent une forme oblongue s'étendant selon un axe parallèle audit axe longitudinal (40a) dudit carénage (4).

5. Mât d'aéronef selon la revendication 3, dans lequel lesdites ouvertures des ferrures destinées à être insérées dans les chapes de la nervure transversale avant (42) dudit carénage (4) présentent une forme oblongue s'étendant selon une direction parallèle à l'axe longitudinal (40a) du carénage (4) et lesdites ouvertures des ferrures destinées à être insérées dans les chapes de la nervure transversale arrière (44) dudit carénage (4) présentent une forme oblongue s'étendant selon un axe perpendiculaire audit axe longitudinal (40a) dudit carénage (4).

6. Mât d'aéronef selon l'une des revendications 3 à 5 dans lequel le pion (32) présente une forme conique ou tronconique.

7. Mât d'aéronef selon l'une des revendications 3 à 6 dans lequel les éléments de fixation (46) sont des vis à tête fraisée et dans lequel tout ou partie de chacun desdits alésages (42b, 44b) comprend un filetage intérieur de forme complémentaire à un filetage desdites vis (46).

8. Mât d'aéronef selon l'une quelconque des revendications 3 à 7 comprenant six interfaces de liaison mécanique seulement entre ladite structure primaire (3) et le carénage (4), ledit pion étant doublé et ladite nervure transversale avant (42) comprenant une deuxième ouverture traversante.

9. Aéronef (5) comprenant un carénage selon la revendication 1, ou un ensemble de carénage selon la revendication 2 ou un mât d'aéronef selon l'une des revendications 3 à 8.

10. Procédé d'assemblage d'un carénage de mât d'aéronef selon l'une des revendications 3 à 8, le procédé comprenant :
- un emmanchage du carénage (4) sur le pion (32) de la structure primaire (3) d'un mât d'aéronef, puis,
- un positionnement des quatre chapes (421, 42r, 441, 44r) du carénage (4) autour des quatre ferrures (33) de la structure primaire (3) de sorte à aligner lesdits alésages (42b, 44b) desdites chapes (42, 44) avec lesdites ouvertures oblongues (33', 33") desdites ferrures (33), lesdites ferrures (33) étant insérées chacune dans l'une desdites chapes, puis,
- une insertion de chacun des quatre éléments de fixation (46) dans un alésage d'une chape (421, 44r, 441, 44r) dans laquelle est insérée une ferrure (33) et dans l'ouverture oblongue de ladite ferrure (33) de sorte à maintenir en position le carénage (4) dudit mât d'aéronef sur ladite structure primaire selon un équilibre isostatique.

## Patentansprüche

1. Verkleidung (4) für einen Flugzeugpylon, die sich entlang einer Längsachse (40a) erstreckt und eine Wand (40) aufweist, die mindestens zwei gegenüberliegende Flanken (40r, 401), die jeweils zu beiden Seiten in Bezug auf die Längsachse (40a) ausgerichtet sind, und einen zentralen inneren Hohlraum aufweist, wobei die beiden gegenüberliegenden Flanken (40r, 401) im unteren oder oberen Teil der Verkleidung (4) aufeinandertreffen, wobei die Verkleidung (4) so beschaffen ist, dass sie Folgendes aufweist:
- eine vordere Querrippe (42), die fest an der Wand (40) befestigt ist und sich senkrecht zu beiden Seiten der Längsachse (40a) erstreckt, wobei die vordere Querrippe (42) eine Durchgangsöffnung (43) aufweist, die dazu gestaltet ist, einen Zapfen (32) einer äußeren Struktur (30, 31) durch Einpressen in einer Richtung (X) parallel zur Längsachse (40a) aufzunehmen, und zwei Gabelköpfe (421, 42r) aufweist, die jeweils Bohrungen entlang einer Längsachse (42a) aufweisen, die senkrecht zur Längsachse (40a) der Verkleidung (4) ausgerichtet ist und gegenüber einer Durchgangsöffnung einer der gegenüberliegenden Flanken (40r, 401) angeordnet ist, und
- eine hintere Querrippe (44), die fest an der Wand (40) befestigt ist und sich senkrecht zu beiden Seiten der Längsachse (40a) erstreckt und zwei Gabelköpfe (441, 44r) aufweist, die jeweils Bohrungen entlang einer Längsachse (44a) aufweisen, die senkrecht zur Längsachse (40a) der Verkleidung (4) ausgerichtet ist und gegenüber einer Durchgangsöffnung einer der gegenüberliegenden Flanken (40r, 401) angeordnet ist.

2. Verkleidungsanordnung für einen Flugzeugpylon mit einer Verkleidung (4) für einen Flugzeugpylon nach Anspruch 1 und vier Befestigungselementen (46), die so gestaltet sind, dass sie jeweils in eine Bohrung in einem der Gabelköpfe eingeführt und in Position gehalten werden.

3. Flugzeugpylon (3, 4) mit einer Verkleidungsanordnung nach Anspruch 2 und einer Primärstruktur (3) des Flugzeugs, wobei die Primärstruktur (3) einen Zapfen (32) aufweist, der entlang einer Achse parallel zur Längsachse (40a) der Verkleidung (4) ausgerichtet und so angeordnet ist, dass er in die Durchgangsöffnung (43) der vorderen Querrippe (42) passt, und mit vier Beschlägen (33), die jeweils so angeordnet sind, dass jeder in einen der Gabelköpfe (421, 42r, 441, 44r) eingeführt werden kann und jeder eine Durchgangsöffnung (33', 33") aufweist, die so konfiguriert ist, dass sie gegenüber der Bohrung des Gabelkopfes angeordnet ist und so konfiguriert ist, dass sie einen Bereich (46") eines der vier Befestigungselemente (46) aufnimmt, das in die Bohrung (44b, 44b) des Gabelkopfes eingeführt wird, wobei die Öffnungen (33') der Beschläge, die in die Gabelköpfe (421, 42r) der vorderen Querrippe (42) der Verkleidung (4) eingesetzt werden sollen, eine längliche Form aufweisen, die sich in einer Richtung senkrecht zur Längsachse (40a) der Verkleidung (4) erstreckt, und die Öffnungen der Beschläge, die in die Gabelköpfe (441, 44r) der hinteren Querrippe (44) der Verkleidung (4) eine längliche Form aufweisen, die sich entlang einer Achse parallel zur Längsachse (40a) der Verkleidung (4) erstreckt, oder umgekehrt.

4. Flugzeugpylon nach Anspruch 3, wobei die Öffnungen der Beschläge, die dazu bestimmt sind, in die Gabelköpfe der vorderen Querrippe (42) der Verkleidung (4) eingesetzt zu werden, eine längliche Form aufweisen, die sich in einer Richtung senkrecht zur Längsachse (40a) der Verkleidung (4) erstreckt, und die Öffnungen der Beschläge, die dazu bestimmt sind, in die Gabelköpfe der hinteren Querrippe (44) der Verkleidung (4) eingesetzt zu werden, eine längliche Form aufweisen, die sich in einer Achse parallel zur Längsachse (40a) der Verkleidung (4) erstreckt.

5. Flugzeugpylon nach Anspruch 3, wobei die Öffnungen der Beschläge, die dazu bestimmt sind, in die Gabelköpfe der vorderen Querrippe (42) der Verkleidung (4) eingesetzt zu werden, eine längliche Form aufweisen, die sich in einer Richtung parallel zur Längsachse (40a) der Verkleidung (4) erstreckt, und die Öffnungen der Beschläge, die dazu bestimmt sind, in die Gabelköpfe der hinteren Querrippe (44) der Verkleidung (4) eingesetzt zu werden, eine längliche Form aufweisen, die sich in einer Achse senkrecht zur Längsachse (40a) der Verkleidung (4) erstreckt.

6. Flugzeugpylon nach einem der Ansprüche 3 bis 5, bei dem der Zapfen (32) eine konische oder kegelstumpfförmige Form aufweist.

7. Flugzeugpylon nach einem der Ansprüche 3 bis 6, bei dem die Befestigungselemente (46) Senkkopfschrauben sind und bei dem die Gesamtheit oder ein Teil der Bohrungen (42b, 44b) ein Innengewinde mit einer Form aufweist, die komplementär zu einem Gewinde der Schrauben (46) ist.

8. Flugzeugpylon nach einem der Ansprüche 3 bis 7 mit sechs Schnittstellen für eine mechanische Verbindung nur zwischen der Primärstruktur (3) und der Verkleidung (4), wobei der Zapfen verdoppelt ist und die vordere Querrippe (42) eine zweite Durchgangsöffnung aufweist.

9. Flugzeug (5), das eine Verkleidung nach Anspruch 1 oder eine Verkleidungsanordnung nach Anspruch 2 oder einen Flugzeugpylon nach einem der Ansprüche 3 bis 8 aufweist.

10. Verfahren zum Zusammenbauen einer Verkleidung für einen Flugzeugpylon nach einem der Ansprüche 3 bis 8, wobei das Verfahren Folgendes aufweist:
- Einpressen der Verkleidung (4) auf den Zapfen (32) der Primärstruktur (3) eines Flugzeugpylons und anschließend
- Positionieren der vier Gabelköpfe (421, 42r, 441, 44r) der Verkleidung (4) um die vier Beschläge (33) der Primärstruktur (3) herum, so dass die Bohrungen (42b, 44b) der Gabelköpfe (42, 44) mit den länglichen Öffnungen (33', 33") der Beschläge (33) ausgerichtet werden, wobei die Beschläge (33) jeweils in einen der Gabelköpfe eingesetzt werden, und anschließend
- Einsetzen jedes der vier Befestigungselemente (46) in eine Bohrung eines Gabelkopfes (421, 44r, 441, 44r), in den ein Beschlag (33) eingesetzt ist, und in die längliche Öffnung des Beschlags (33), so dass die Verkleidung (4) des Flugzeugpylons an der Primärstruktur in einem isostatischen Gleichgewicht in Position gehalten wird.

## Claims

1. Aircraft pylon fairing (4) extending along a longitudinal axis (40a) and comprising a wall (40) having at least two opposite flanks (40r, 401) oriented respectively one on each side of said longitudinal axis (40a), and a central interior cavity, the two opposite flanks (40r, 401) meeting in the lower or upper part of said fairing (4), said fairing (4) being such that it comprises:
- a front transverse rib (42) securely fixed to said wall (40) and extending perpendicularly on each side of said longitudinal axis (40a), said front transverse rib (42) comprising a through opening (43) configured to accept a peg (32) of an exterior structure (30, 31) by push-fitting in a direction (X) parallel to said longitudinal axis (40a), and comprising two yokes (421, 42r) each having bores along a longitudinal axis (42a) oriented perpendicular to said longitudinal axis (40a) of the fairing (4) and arranged facing a through opening in one of said opposing flanks (40r, 401), and
- a rear transverse rib (44) securely fixed to said wall (40) and extending perpendicularly on each side of said longitudinal axis (40a) and comprising two yokes (441, 44r) each having bores along a longitudinal axis (44a) oriented perpendicular to said longitudinal axis (40a) of the fairing (4) and arranged facing a through opening in one of said opposing flanks (40r, 401).

2. Aircraft pylon fairing assembly comprising an aircraft pylon fairing (4) according to Claim 1 and four fixing elements (46) which are configured to each be inserted into and held in position in a bore of one of said yokes.

3. Aircraft pylon (3, 4) comprising a fairing assembly according to Claim 2 and an aircraft primary structure (3), said primary structure (3) comprising a peg (32) oriented along an axis parallel to the longitudinal axis (40a) of the fairing (4) and arranged to be inserted into said through opening (43) of said front transverse rib (42), and four fittings (33) which are respectively arranged in such a way as to each be inserted into one of said yokes (421, 42r, 441, 44r) and each having a through opening (33', 33") configured to be arranged facing said bore of said yoke and configured to receive a portion (46") of one of said four fixing elements (46) which is inserted into said bore (44b, 44b) of said yoke, said openings (33') in the fittings which are intended to be inserted into the yokes (421, 42r) of the front transverse rib (42) of said fairing (4) having an oblong shape extending in a direction perpendicular to the longitudinal axis (40a) of the fairing (4), and said openings in the fittings that are intended to be inserted into the yokes (441, 44r) of the rear transverse rib (44) of said fairing (4) having an oblong shape extending along an axis parallel to said longitudinal axis (40a) of said fairing (4), or vice versa.

4. Aircraft pylon according to Claim 3, wherein said openings in the fittings intended to be inserted into the yokes of the front transverse rib (42) of said fairing (4) have an oblong shape extending in a direction perpendicular to the longitudinal axis (40a) of the fairing (4), and said openings of the fittings intended to be inserted into the yokes of the rear transverse rib (44) of said fairing (4) have an oblong shape extending along an axis parallel to said longitudinal axis (40a) of said fairing (4).

5. Aircraft pylon according to Claim 3, wherein said openings in the fittings intended to be inserted into the yokes of the front transverse rib (42) of said fairing (4) have an oblong shape extending in a direction parallel to the longitudinal axis (40a) of the fairing (4), and said openings of the fittings intended to be inserted into the yokes of the rear transverse rib (44) of said fairing (4) have an oblong shape extending along an axis perpendicular to said longitudinal axis (40a) of said fairing (4).

6. Aircraft pylon according to one of Claims 3 to 5, wherein the peg (32) has a conical or frustoconical shape.

7. Aircraft pylon according to one of Claims 3 to 6, wherein the fixing elements (46) are countersunk screws and wherein all or part of each of said bores (42b, 44b) comprises an internal screw thread of a shape that complements a screw thread of said screws (46).

8. Aircraft pylon according to any one of Claims 3 to 7, comprising just six mechanical-connection interfaces between said primary structure (3) and the fairing (4), said peg being duplicated and said front transverse rib (42) comprising a second through opening.

9. Aircraft (5) comprising a fairing according to Claim 1 or a fairing assembly according to Claim 2 or an aircraft pylon according to one of Claims 3 to 8.

10. Method for assembling an aircraft pylon fairing according to one of Claims 3 to 8, the method comprising:
- push-fitting the fairing (4) onto the peg (32) of the primary structure (3) of an aircraft pylon, then
- positioning the four yokes (421, 42r, 441, 44r) of the fairing (4) around the four fittings (33) of the primary structure (3) in such a way as to align said bores (42b, 44b) of said yokes (42, 44) with said oblong openings (33', 33") of said fittings (33), said fittings (33) each being inserted into one of said yokes, then
- inserting each of the four fixing elements (46) into a bore of a yoke (421, 42r, 441, 44r) into which a fitting (33) has been inserted and into the oblong opening in said fitting (33) so as to hold the fairing (4) of said aircraft pylon in position on said primary structure in a statically determinate manner.
